# EUROPÄISCHE PATENTSCHRIFT

(11) **EP 2 815 452 B1**
(45) Veröffentlichungstag und Bekanntmachung des Hinweises auf die Patenterteilung: **08.04.2020**
(21) Anmeldenummer: 13705133.0
(22) Anmeldetag: 11.02.2013
(51) Int. Cl.: H01M 10/615, H01M 2/02, H01M 6/50, F21S 9/02, H01M 10/623, H01M 10/643, H01M 10/6571, H01M 10/653, H01M 10/637, H01M 2/10

(54) **NOTLEUCHTE MIT AKKUMULATOR**
EMERGENCY LUMINAIRE WITH RECHARGEABLE BATTERY
ÉCLAIRAGE DE SECOURS COMPRENANT UN ACCUMULATEUR

(30) Priorität: 15.02.2012 DE 202012100509 U
(43) Veröffentlichungstag der Anmeldung: 24.12.2014
(73) Patentinhaber: Zumtobel Lighting GmbH, 6850 Dornbirn (AT)
(72) Erfinder: OBERHAUSER, Bernd, 6840 Götzis (AT); METZLER, Bernd, 6850 Dornbirn (AT)
(74) Vertreter: Thun, Clemens
(86) Internationale Anmeldenummer: PCT/EP2013/052645
(87) Internationale Veröffentlichungsnummer: WO 2013/120791

(56) Entgegenhaltungen:
- EP-A2- 1 429 072
- DE-A1- 2 128 307
- DE-A1- 3 620 041
- DE-U1- 9 104 787
- US-A1- 2002 025 471

## Beschreibung

Die vorliegende Erfindung betrifft eine Notleuchte, die mindestens eine Lichtquelle, einen Anschluss zum Anschließen der Notleuchte an eine externe Stromversorgung und mindestens einen Akkumulator zur Notstromversorgung der Lichtquelle bei Ausfall der externen Stromversorgung aufweist.

Notstromleuchten bzw. Notleuchten kommen sowohl in Gebäuden als auch außerhalb von Gebäuden zum Einsatz, wenn eine Beleuchtung, insbesondere eine Notbeleuchtung, auch bei Ausfall der Hauptstromversorgung gewünscht bzw. aufgrund von entsprechenden Sicherheitsbestimmungen gefordert ist. Des Weiteren können Notleuchten auch derart ausgestaltet sein, dass sie auf einen Rettungs- bzw. Fluchtweg hinweisen, weshalb derartige Notleuchten häufig auch als Hinweis-, Fluchtweg- oder Rettungswegleuchten bezeichnet werden. Auch bei derartig ausgestalteten Notleuchten ist es erforderlich, dass bei Ausfall der Hauptstromversorgung diese nach wie vor leuchten, um beispielsweise flüchtenden Personen die Rettung bzw. Flucht so einfach wie möglich zu gestalten.

Im Wesentlichen sind bisher zwei verschiedene Varianten bekannt, die eine entsprechende Notstromversorgung der Notleuchten bei Ausfall der Hauptstromversorgung ermöglichen. Bei einer ersten Variante werden die Notleuchten zusätzlich zu einer Hauptstromversorgung auch an eine zentrale Notstromversorgung angeschlossen, die gewährleistet, dass bei Ausfall des Hauptstromnetzes die Notleuchten noch entsprechend versorgt werden. Bei einer zweiten Variante ist hingegen vorgesehen, dass die Notleuchten lediglich an die externe Hauptstromversorgung angeschlossen sind, zusätzlich dann allerdings einen Akkumulator aufweisen, der bei Ausfall der externen Hauptstromversorgung die Notleuchte bzw. die in der Notleuchte angeordneten Lichtquellen entsprechend versorgen kann.

In Gebäuden kommt häufig die zweite Variante mit Akkumulator zum Einsatz, da u.a. die Installation einer zentralen Notstromversorgung zu einem erheblich höheren Montageaufwand und somit auch zu erheblich höheren Kosten führt. Im Gegensatz dazu werden im Außenbereich Notleuchten verwendet, die entsprechend der ersten Variante an eine zentrale Notstromversorgung angeschlossen sind. Dies ergibt sich insbesondere durch die im Außenbereich teilweise auftretenden niedrigen Temperaturen, welche sich negativ auf die Lebensdauer der Akkumulatoren auswirken und u.U. sogar zu einer Beschädigung der Akkumulatoren führen können. Neben der Verwendung von Notleuchten mit zentraler Notstromversorgung im Außenbereich finden derartige Notleuchten beispielsweise aber auch häufig Anwendung in Umgebungen mit entsprechend niedriger Temperatur, wie einem Kühlhaus.

Aufgrund der Kosteneinsparungen und der einfacheren Installation, ist die Verwendung von Notleuchten mit Akkumulatoren aber auch im Außenbereich und Umgebungen mit entsprechend niedrigen Temperaturen, wünschenswert. Durch die negativen Auswirkungen niedriger Temperaturen auf die Akkumulatoren ist der Einsatz derartiger Notleuchten bisher allerdings nicht so ohne Weiteres möglich bzw. sinnvoll.

Aus der EP 1 429 072 A2 ist beispielsweise eine explosionsgeschützte Leuchte bekannt, die einen Akku als Notstromquelle aufweist.

Der vorliegenden Erfindung liegt nun die Aufgabe zugrunde, eine Notleuchte mit einem Akkumulator zu entwickeln, die auch bei entsprechend niedrigen Temperaturen eingesetzt werden kann, ohne dass dies negative Auswirkungen auf den Akkumulator hat.

Die Aufgabe wird durch eine Notleuchte gemäß Anspruch 1 gelöst. Vorteilhafte Weiterbildungen der Erfindung sind Gegenstand der abhängigen Ansprüche.

Erfindungsgemäß ist eine Notleuchte vorgesehen, die eine Lichtquelle, einen Anschluss zum Anschließen der Notleuchte an eine externe Stromversorgung, einen Akkumulator zur Notstromversorgung der Lichtquelle bei Ausfall der externen Stromversorgung und Mittel zum Beheizen des Akkumulators aufweist, wobei die Mittel zum Beheizen des Akkumulators eine Heizung aufweisen. Der Akkumulator ist dabei innerhalb eines kastenförmigen Gehäuses angeordnet, wobei in dem kastenförmigen Gehäuse die Heizung angebracht ist. Bei dem kastenförmigen Gehäuse handelt es sich um ein geschlossenes Blechgehäuse, wobei die Heizung im unteren Bereich des Blechgehäuses angeordnet ist. Zusätzlich ist noch vorgesehen, dass die Heizung durch ein Lochblech oder einen Abstandshalter als Berührungsschutz bedeckt ist, wobei der Berührungsschutz zwischen Akkumulator und Heizung angeordnet ist.

Die Mittel zum Beheizen des Akkumulators weisen vorteilhafterweise eine Steuerung auf, wobei die Steuerung dazu ausgebildet ist, die Heizung bei Unterschreiten einer Grenztemperatur zu aktivieren und bei Überschreiten der Grenztemperatur zu deaktivieren, wobei die Grenztemperatur vorzugsweise 0° C beträgt.

Durch diese Ausgestaltung der Notleuchte ist es möglich, dass der Akkumulator auch bei entsprechend niedrigen Umgebungstemperaturen über einer Grenztemperatur, beispielsweise 0° C, gehalten wird, wodurch negative Auswirkungen auf den Akkumulator aufgrund zu niedriger Umgebungstemperaturen vermieden werden können.

Gemäß einer vorteilhaften Weiterbildung der Erfindung ist auch vorgesehen, dass die Heizung über den Anschluss zum Anschließen der Notleuchte an eine externe Stromversorgung an die externe Stromversorgung angeschlossen ist.

Die Heizung ist somit solange einsatzfähig, solange kein Ausfall der externen Stromversorgung vorliegt. Bei Ausfall der externen Stromversorgung fällt dann auch die Heizung für den Akkumulator aus, wobei dies nicht weiter problematisch ist, da dieser dann zur Notstromversorgung der Lichtquelle genutzt wird und hierdurch eine ausreichende Eigenwärme produziert.

Vorzugsweise ist des Weiteren vorgesehen, dass die Heizung mindestens einen Heizdraht aufweist und es sich bei der Steuerung um einen Bi-Metallkontakt handelt.

Durch den Berührungsschutz ergibt sich der Vorteil, dass die Heizung nicht unmittelbar mit dem Akkumulator in Kontakt kommt und zusätzlich auch, dass bei einem Öffnen des Gehäuses eine versehentliche Berührung weitestgehend vermieden werden kann.

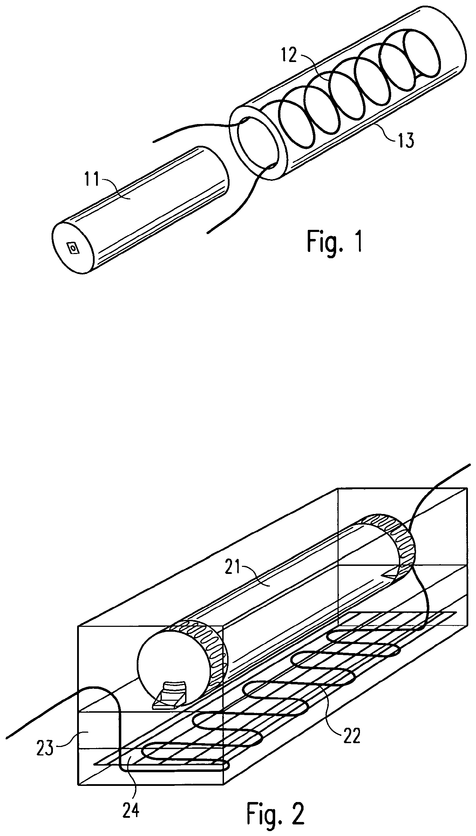

Nachfolgend wird die Erfindung anhand von Ausführungsbeispielen und den beiliegenden Zeichnungen näher erläutert, wobei zu beachten ist, dass die in Figur 1 gezeigte erste Ausführungsform nicht unter den Schutzumfang der Ansprüche fällt, jedoch zum besseren Verständnis der Erfindung dient. Demgegenüber zeigt die in Figur 2 dargestellte zweite Ausführungsform die Erfindung gemäß den Ansprüchen. Es zeigen:
- Figur 1: Akkumulator einer Notleuchte und Mittel zum Beheizen des Akkumulators;
- Figur 2: Akkumulator einer Notleuchte und Mittel zum Beheizen des Akkumulators entsprechend einer Ausführungsform.

In Figur 2 ist eine Ausführungsform zum Beheizen eines Akkumulators gezeigt, wobei die Notleuchte, in der der Akkumulator angeordnet ist, nicht gezeigt wird, da es sich bis auf die zum Beheizen des Akkumulators notwendigen Elemente, um eine Notleuchte handelt, die bereits hinlänglich aus dem Stand der Technik bekannt ist. Dementsprechend wird im Folgenden auch nur auf die Teile der Notleuchte eingegangen, die insbesondere für das Beheizen des Akkumulators erheblich sind.

Es ist eine Notleuchte vorgesehen, die eine Lichtquelle, einen Anschluss für eine externe Stromversorgung und einen Akkumulator 11 bzw. 21 zur Notstromversorgung der Lichtquelle bei Ausfall der externen Stromversorgung aufweist, wobei im Gegensatz zu bisher bekannten Notleuchten mit Akkumulatoren nunmehr auch noch vorgesehen ist, dass die Notleuchte Mittel 12 zum Beheizen des

Akkumulators 11 bzw. 21 aufweist. Die Mittel zum Beheizen des Akkumulators 11 bzw. 21 weisen hierbei eine Heizung und eine Steuerung auf, wobei die Steuerung die Heizung nur dann aktiviert, wenn die Umgebungstemperaturen des Akkumulators 11 bzw. 21 unter eine bestimmte Temperaturgrenze, beispielsweise 0° C, fallen.

Wie den Figuren 1 und 2 entnommen werden kann, handelt es sich bei der Heizung um Heizdrähte 12 und 22. Als Steuerung kann ein nicht näher gezeigter Bi-Metallkontakt verwendet werden, der an bzw. in der Nähe der Akkumulatoren 11 und 21 angeordnet ist und bei Unterschreiten der entsprechenden Grenztemperatur einen Stromkreis schließt, wodurch durch die Heizdrähte 12 und 22 entsprechend Strom fließen kann, was zu einer Erwärmung der Heizdrähte 12 und 22 führt.

Dabei ist vorgesehen, dass die Heizung bzw. die Heizdrähte 12 und 22 über den Anschluss der ein Anschließen der Notleuchte an eine externe Stromversorgung ermöglicht, mit der externen Stromversorgung verbunden sind. Hierdurch kann die Heizung jederzeit durch die Steuerung aktiviert werden, solange kein Ausfall der externen Stromversorgung vorliegt. Im Falle eines Ausfalls der externen Stromversorgung fällt zwar dann auch die Heizung für den Akkumulator 11 bzw. 21 aus, da in diesem Fall dann aber die Lichtquelle durch den Akkumulator 11 bzw. 21 entsprechend versorgt wird, produziert dieser eine ausreichende Eigenwärme, durch die gewährleistet ist, dass der Akkumulator 11 bzw. 21 ausreichend warm gehalten werden kann.

In Figur 1 ist ein Beispiel gezeigt, bei dem ein zylinderförmiger Akkumulator
11 ein einem rohrförmigen Körper 13 angeordnet ist. Der Innenumfang des rohrförmigen Körpers 13 entspricht hierbei dem Außenumfang des Akkumulators 11, wobei die Heizdrähte 12 im Inneren des rohrförmigen Körpers 13 in Ausnehmungen bzw. Hohlkammern angebracht sind. Bei diesem rohrförmigen Körper 13 handelt es sich somit um ein sog. Heatpack, das beispielsweise aus Schaumstoff bestehen kann.

Die als Bi-Metallkontakt ausgestaltete Steuerung kann bei dem in Figur 1 gezeigten Beispiel dann beispielsweise an der Innenseite des rohrförmigen Körpers 13 angeordnet sein.

Die Ausführungsform zeigt in Figur 2 demgegenüber ein als geschlossenes Blechgehäuse ausgestaltetes kastenförmiges Gehäuse 23, in dem der Akkumulator 21 angeordnet ist. Bei dem Blechgehäuse 23 sind dann unterhalb bzw. seitlich des Akkumulators 21 in einem unteren bzw. seitlichen Bereich des Blechgehäuses 23 die Heizdrähte 22 angeordnet. Zusätzlich ist bei der in Figur 2 gezeigten Ausführungsform dann auch noch vorgesehen, dass die Heizdrähte 21 von einem Lochblech 24 oder einem Abstandshalter als Berührungsschutz bedeckt bzw. überdeckt werden, wobei das Lochblech 24 bzw. der Abstandshalter zwischen den Heizdrähten 22 und dem Akkumulator 21 angeordnet ist. Hierdurch kann sowohl eine direkte versehentliche Berührung der Heizdrähte 22 beim Öffnen des Gehäuses 23 als auch ein direkter Kontakt zwischen dem Akkumulator 21 mit den Heizdrähten 22 verhindert werden. Der nicht dargestellte Bi-Metallkontakt als Steuerung kann wiederum innerhalb des Gehäuses 23 angeordnet sein.

Anstelle eines Akkumulators wäre auch der Einsatz einer Batterie denkbar. Außerdem können sowohl bei dem Beispiel in Figur 1 als auch bei der Ausführungsform in Figur 2 auch andere Vorrichtungen anstelle des Bi-Metallkontakts zur Steuerung verwendet werden. So wäre beispielsweise auch die Nutzung von Sensoren oder dergleichen denkbar.

Die erfindungsgemäße Notleuchte mit Akkumulator kann somit unabhängig von der Umgebungstemperatur eingesetzt werden, da negative Auswirkungen niedriger Umgebungstemperaturen auf den Akkumulator durch das Beheizen des Akkumulators vermieden werden.

## Patentansprüche

1. Notleuchte aufweisend
• mindestens eine Lichtquelle,
• einen Anschluss zum Anschließen der Notleuchte an eine externe Stromversorgung,
• mindestens einen Akkumulator (11, 21) zur Notstromversorgung der Lichtquelle bei Ausfall der externen Stromversorgung und
• Mittel zum Beheizen des Akkumulators (11, 21),
wobei die Mittel zum Beheizen des Akkumulators (11, 21) eine Heizung (12, 22) aufweisen,
**dadurch gekennzeichnet,**
**dass** der Akkumulator (21) innerhalb eines kastenförmigen Gehäuses (23) angeordnet ist, wobei in dem kastenförmigen Gehäuse (23) die Heizung (22) angebracht ist und es sich bei dem kastenförmigen Gehäuse um ein geschlossenes Blechgehäuse (23) handelt, wobei die Heizung (22) im unteren Bereich des Blechgehäuses (23) angebracht ist und durch ein Lochblech (24) oder einen Abstandshalter als Berührungsschutz bedeckt ist, wobei der Berührungsschutz zwischen Akkumulator (21) und Heizung (22) angeordnet ist.

2. Notleuchte nach Anspruch 1,
**dadurch gekennzeichnet,**
**dass** die Heizung (12, 22) über den Anschluss zum Anschließen der Notleuchte an eine externe Stromversorgung an die externe Stromversorgung angeschlossen ist.

3. Notleuchte nach einem der Ansprüche 1-2,
**dadurch gekennzeichnet,**
**dass** die Heizung mindestens einen Heizdraht (12, 22) aufweist.

4. Notleuchte nach einem der Ansprüche 1-3,
**dadurch gekennzeichnet,**
**dass** die Mittel zum Beheizen des Akkumulators eine Steuerung aufweisen, wobei die Steuerung dazu ausgebildet ist, die Heizung (12, 22) bei Unterschreiten einer Grenztemperatur zu aktivieren und bei Überschreiten der Grenztemperatur zu deaktivieren.

5. Notleuchte nach Anspruch 4,
**dadurch gekennzeichnet,**
**dass** es sich bei der Steuerung um einen Bi-Metallkontakt handelt.

6. Notleuchte nach einem der Ansprüche 4-5,
**dadurch gekennzeichnet,**
**dass** die Grenztemperatur 0° C beträgt.

## Claims

1. An emergency luminaire having
• at least one light source,
• a connection for connecting the emergency luminaire to an external power supply,
• at least one rechargeable battery (11, 21) for emergency power supply of the light source in the event of failure of the external power supply and
• means for heating the rechargeable battery (11, 21),
wherein the means for heating the rechargeable battery (11, 21) have a heater (12, 22), **characterized in**
**that** the rechargeable battery (21) is arranged within a box-shaped housing (23), wherein the heater (22) is mounted in the box-shaped housing (23) and the box-shaped housing is a closed sheet metal housing (23), wherein the heater (22) is mounted in the lower region of the sheet metal housing (23) and is covered by a perforated plate (24) or a spacer as protection against contact, wherein the protection against contact is arranged between the rechargeable battery (21) and the heater (22).

2. The emergency luminaire according to Claim 1,
**characterized in**
**that** the heater (12, 22) is connected to the external power supply via the connection for connecting the emergency luminaire to an external power supply.

3. The emergency luminaire according to any one of Claims 1-2,
**characterized in**
**that** the heater has at least one heating wire (12, 22).

4. The emergency luminaire according to any one of Claims 1-3,
**characterized in**
**that** the means for heating the rechargeable battery have a control,
wherein the control is designed to activate the heater (12, 22) when the temperature falls below a limit and to deactivate said heater when the temperature exceeds the limit.

5. The emergency luminaire according to Claim 4,
**characterized in**
**that** the control is a bi-metal contact.

6. The emergency luminaire according to any one of Claims 4-5,
**characterized in**
**that** the limit temperature is 0°C.

## Revendications

1. Luminaire de secours comprenant
• au moins une source de lumière,
• une connexion pour le raccordement du luminaire de secours à une alimentation électrique externe,
• au moins un accumulateur (11, 21) pour une alimentation électrique de secours de la source de lumière lors d'une panne de l'alimentation électrique externe et
• des moyens pour le chauffage de l'accumulateur (11, 21),
les moyens pour le chauffage de l'accumulateur (11, 21) comprenant un chauffage (12, 22),
**caractérisé en ce que**
l'accumulateur (21) est disposé à l'intérieur d'un boîtier (23) en forme de caisson, le chauffage (22) étant monté dans le boîtier (23) en forme de caisson, et le boîtier en forme de caisson étant un boîtier fermé en tôle (23), le chauffage (22) étant monté dans la partie inférieure du boîtier en tôle (23) et étant recouvert d'une tôle perforée (24) ou d'une entretoise en tant que protection contre le contact, la protection contre le contact étant disposée entre l'accumulateur (21) et le chauffage (22).

2. Luminaire de secours selon la revendication 1,
**caractérisé en ce que**
le chauffage (12, 22) est raccordé à l'alimentation électrique externe par l'intermédiaire de la connexion pour le raccordement du luminaire de secours à une alimentation électrique externe.

3. Luminaire de secours selon l'une des revendications 1 à 2,
**caractérisé en ce que**
le chauffage comprend au moins un fil chauffant (12, 22).

4. Luminaire de secours selon l'une des revendications 1 à 3,
**caractérisé en ce que**
les moyens de chauffage de l'accumulateur comprennent une commande, la commande étant conçue pour activer le chauffage (12, 22) lors du passage en dessous d'une température limite et pour le désactiver lors du dépassement de la température limite.

5. Luminaire de secours selon la revendication 4,
**caractérisé en ce que**
la commande est un contact bimétallique.

6. Luminaire de secours selon l'une des revendications 4 à 5,
**caractérisé en ce que**
la température limite est de 0°C.
